# EUROPEAN PATENT SPECIFICATION

(11) **EP 3 174 398 B1**
(45) Date of publication and mention of the grant of the patent: **05.06.2019**
(21) Application number: 15767270.0
(22) Date of filing: 30.07.2015
(51) Int. Cl.: A23G 1/54, A21D 13/45, A21D 13/36, A23G 3/54

(54) **PROCESS FOR PRODUCING A WAFER, AND CONFECTIONERY PRODUCT COMPRISING SAID WAFER**
VERFAHREN ZUR HERSTELLUNG EINES WAFFELPRODUKTS UND KONFEKTPRODUCT UMFASSEND DIESEN WAFER
PROCÉDÉ POUR PRODUIRE UNE GAUFRETTE ET CONFISERIE COMPRENANT CETTE GAUFFRETTE

(30) Priority: 31.07.2014 IT TO20140610; 17.12.2014 IT TO20141056
(43) Date of publication of application: 07.06.2017
(73) Proprietor: SOREMARTEC S.A., 2632 Findel (LU); Ferrero S.p.A., 12051 Alba (Cuneo) (IT)
(72) Inventor: CAVALLOTTO, Aldo, I-12055 Diano d'Alba (Cuneo) (IT)
(74) Representative: Frontoni, Stefano
(86) International application number: PCT/IB2015/055761
(87) International publication number: WO 2016/016834

(56) References cited:
- EP-A1- 1 258 194
- EP-A1- 1 393 631
- EP-A1- 1 597 971
- EP-A2- 0 499 301
- WO-A1-2013/108206
- FR-A1- 2 862 512
- GB-A- 2 432 773
- DATABASE WPI Week 200327 Thomson Scientific, London, GB; AN 2003-270829 XP002738297, -& JP 2002 306051 A (BRENTWOOD KK) 22 October 2002 (2002-10-22)
- DATABASE WPI Week 199402 Thomson Scientific, London, GB; AN 1994-010912 XP002738298, & JP H05 316930 A (MORINAGA & CO LTD) 3 December 1993 (1993-12-03)

## Description

### Field of the invention

The present invention relates to a confectionery product of the type comprising a shell formed at least in part by a wafer containing inside a filling, which may for example be in the form of praline or bar.

### Prior art

In a first very widespread type of the product in question, the shell is entirely made of chocolate, and in particular is formed either by two half-shells of chocolate coupled together at their respective mouth edges, or else by a single half-shell, the mouth opening of which is closed by a planar element or bottom that comes to constitute the underside of the product. Products of this type are, for example, described in the patent documents Nos. EP1919296B1 and EP1378174B1, filed in the name of the present applicant.

In a second type of the product in question, which is equally widespread, the shell is instead made entirely of wafer (or waffle), also in this case being formed by two half-shells coupled together or else by a single half-shell closed by a bottom. Preferably, the wafer shell is itself entirely coated with a layer of chocolate to complete the product. A product of this type is, for example, described in the European patent No. EP1072195B1, filed in the name of the present applicant.

WO2013108206 discloses a method for producing a hollow body formed by a pair of wafers (2, 2a), welded together along respective mating annular surfaces (4), by applying an aqueous moistening liquid to at least one of the mating surfaces of the wafers, previously subjected to baking, and by adhesion by mutual contact of said surfaces, characterized in that the moistening liquid is applied to said at least one surface in the form of separate and distinct droplets (G) by pulsed-jet deposition means, creating a relative motion between said jet deposition means and said wafers along the annular profile of said surfaces.

EP1393631 relates to a confectionery product comprising two outer wafer layers, optionally one or more inner wafer layers and cream fillings between the wafer layers, wherein the wafer layers are made from a material which includes cocoa powder. The cocoa wafer layers improve the crunchy texture of the confectionery product.

GB2432773(A) discloses a confectionery product 2 which comprises a wafer shell 4 with at least two integral, separable portions 6, 8. Each portion has a cavity (26, 28) at least partially filled with an edible filling 14, 16 wherein the filling of one cavity is different to the filling of another cavity. The confectionery product 2 preferably comprises means 10 for sealing the substantially filled cavities. Chocolate is the preferred sealing means. The exterior of the wafer shell may identify the different fillings contained within, for example by being decorated with edible ink. A method and apparatus for the production of a confectionery product 2 are also disclosed.

### Drawbacks of the prior art

In general, it is by now universally recognized that the presence of chocolate on the outer surface of confectionery products constitutes an undeniable factor of attraction for the consumer, and this certainly also applies to the filled product in question.

As is well known to the person skilled in of the sector, products coated with or made of chocolate suffer, however, from drawbacks that are not negligible from the standpoint of their conservation, as a result of the plastic nature of chocolate, which renders it very sensitive to heat so that the structural integrity of the chocolate parts can be seriously jeopardized at temperatures above 28-30°C.

On the other hand, chocolate is in any case able to exert a beneficial function from the standpoint of conservation of the products, with specific reference to filled products of the type in question, where the chocolate comes to define the outer structure or outer surface thereof, in so far as, thanks to its very compact consistency, chocolate is able to constitute a protective barrier that prevents infiltration into the product of contaminants present, for example, in air (such as humidity, solid particles, microbiological organisms, such as bacteria, etc.), and moreover prevents leaking of the filling outwards.

In this regard, the present applicant has in fact found that in general, even though filled wafer products not coated with chocolate do not effectively suffer from particular problems linked to the temperature of conservation - at least not like a chocolate product -, they are in any case more easily perishable precisely owing to the absence of the barrier layer guaranteed by the chocolate.

As regards the latter category of product, it may once again be noted that the absence of chocolate on the outer surfaces also means that products of this category may as a whole be less attractive to the eye of the consumer, and this aspect, together with the easily perishable nature mentioned above, certainly explains why this category of product has not so far effectively asserted itself on the market.

### Object of the invention

In this context, the object of the present invention is to provide a new confectionery product that will be able to overcome the aforesaid drawbacks of the known art.

The above object is achieved via a confectionery product according to Claim 1 and a process having the characteristics of Claim 5.

The claims form an integral part of the technical teaching provided herein in relation to the invention.

### Brief description of the drawings

The invention will now be described purely by way of non-limiting example with reference to the annexed representations, in which:
- Figure 1 illustrates an example of the confectionery product described herein;
- Figure 1A is a cross-sectional view according to the plane II-II of Figure 1;
- Figure 2 is a schematic illustration of the process described herein;
- Figure 3 is a schematic illustration of an example of mould means for implementing the process described herein.

### Detailed description of some embodiments of the invention

In the ensuing description, various specific details are illustrated aimed at providing an in-depth understanding of the embodiments.

The references used herein are provided merely for convenience and hence do not define the sphere of protection or the scope of the embodiments.

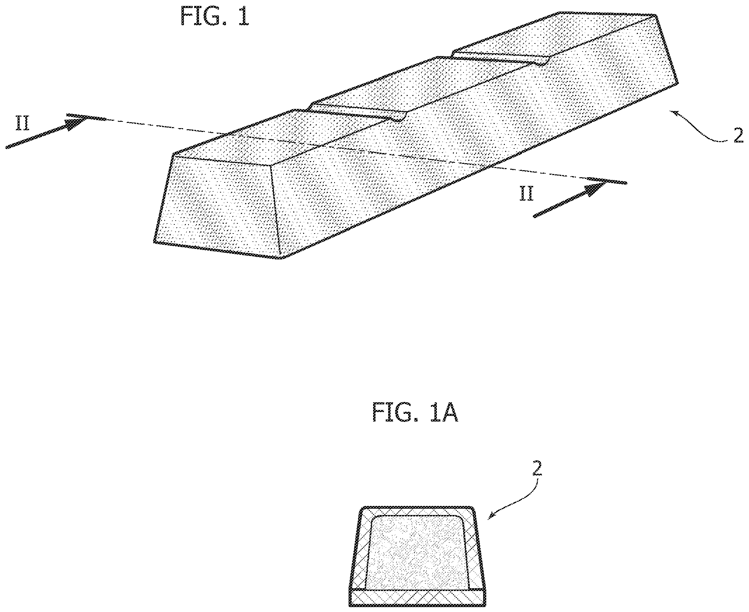

The product described herein is a product constituted by a wafer shell containing a filling inside it, as disclosed in claim 1.. Figures 1 and 1A illustrate an example of how the product described herein may present (in the figures the product is designated by the reference number 2).

The term "wafer" is used in the present description to indicate a shaped sheet resulting from forming and baking a mixture or batter for oven products, but is not to be understood as in any way limiting in relation to the nature of the ingredients used for the batter; it may in fact be, for example, a wafer, obtained from a conventional batter for wafers, but also waffles obtained by forming and baking batters of a different type.

The product described herein is characterized in that the wafer of which its shell is made is prepared starting from a batter containing cocoa powder, the weight percentage of cocoa in the wafer being higher than or equal to 6.9 wt, and in that the outer surface of this wafer has a lustre higher than or equal to 20 gloss - measured at an angle of reading of 8° with respect to a direction orthogonal to the outer surface in question using an instrument with diffuse d/8° sphere geometry. It should be noted that by "outer surface" as used herein is understood the surface of the wafer that comes to define at least part of the outer surface of the product, i.e., its shell.

There now follows an explanation of how these characteristics constitute an innovation as compared to the conventional art.

First of all, the present applicant has noted that a wafer obtained with a batter containing cocoa powder that presents a shiny outer surface is provided with a surface structure more compact and less porous than that of a conventional wafer, which renders it able to isolate the inside of the wafer from the outside more effectively. The present applicant has hence understood that for a wafer prepared with a batter containing cocoa powder there exists a correlation between the degree of lustre of its outer surface and the capacity of this surface to constitute a protective barrier for the product.

The present applicant has also noted that the nature of the lustre in a wafer of this type unexpectedly provides it with an appearance very similar to that of a chocolate surface.

In this context, it should be noted that the presence of cocoa powder in the batter has the dual effect of rendering the final structure of the wafer denser and of bestowing on the wafer the desired colour of chocolate.

On the basis of these observations, the present applicant has then understood that it is possible to identify a filled product, with its shell made of wafer, that is:
i) able to protect its filling and the shell itself effectively from contamination;
ii) not very sensitive to the temperature of conservation;
iii) able to evoke visually in the consumer suggestions similar to those evoked by chocolate.

After an intense experimental activity, the present applicant has hence deemed it possible to identify this type of product by the set of characteristics referred to above, and in particular the characteristic represented by the fact that the outer surface of the wafer has a lustre value higher than or equal to 20 gloss.

The present applicant has also noted that constituting preferred embodiments of the product in question are those in which the wafer is prepared with a batter containing a weight percentage of cocoa powder higher than or equal to 3 wt%, preferably comprised between 3 wt% and 6 wt%, extremes included, or else higher than or equal to 6 wt%, preferably 6 wt% or 7 wt% and 12 wt%, extremes included, even more preferably equal to 8 wt%, in particular for a batter containing an amount of water comprised between 40 wt% and 60 wt%. With this type of batter wafers have been obtained, the outer surfaces of which have lustre values higher than 30 gloss. Laboratory analyses conducted on these surfaces have shown that they present the structural characteristics suitable for performing the function of protection mentioned above, and at the same time are characterized by having an appearance that is altogether comparable to that of a chocolate surface. Typically, the wafer in itself presents a content of cocoa higher than or equal to 6.9 wt%, preferably between 6.9 wt% and 12 wt%, extremes included, or else higher than or equal to 12 wt%, preferably between 12 wt% and 25 wt%, extremes included.

Further preferred embodiments of the product in question will be described hereinafter.

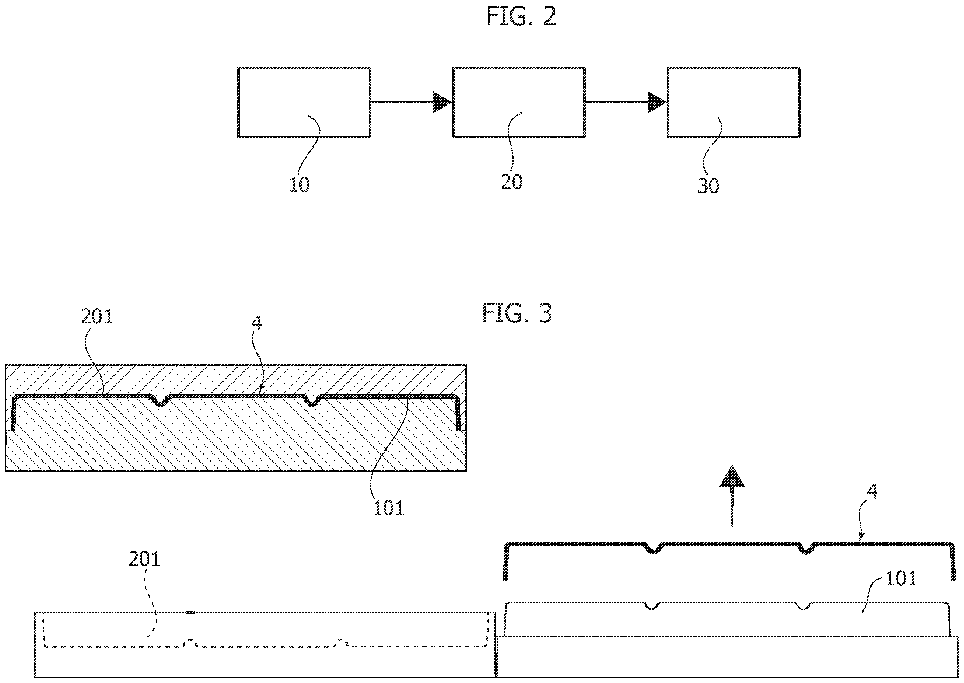

Described in what follows is, instead, the process
according to claim 5 for producing a shiny wafer of the type referred to above. The steps that make up this process are represented schematically in Figure 2.

The first step of the process is that of preparation of the batter (step 10 of Figure 2). In general, this is a batter with a base of water and flour or flours, and possibly sugar, and flavouring products.

In the process described herein, the batter comprises a weight percentage between 40 wt% and 60 wt% of water and a weight percentage higher than or equal to 3 wt % of cocoa powder, preferably cocoa obtained by squeezing and subsequent refining, which replaces a corresponding amount of dry part - i.e., flour, sugars, or flavouring products - in the formulations typical of traditional batters. In various preferred embodiments, the aforesaid percentage of cocoa powder is higher than 3 wt%, preferably comprised between 3 wt% and 9 wt%, or else between 4 wt% and 12 wt%. By way of example, a possible formulation of the batter in question may envisage 25 wt% to 45 wt% of flour, 40 wt% to 60 wt% of water, 3 wt% to 10 wt% of sugar, 3 wt% to 12 wt% of cocoa powder, and 0.1 wt% to 0.8 wt% of bicarbonate of soda.

The techniques of preparation of batters for oven products are in any case well known to the person skilled in of the sector and consequently will not be described in detail herein.

The process then comprises the step of providing mould means within which to bake the batter prepared (step 20 of Figure 2).

In particular, the above means comprise two half-moulds or plates, which define two mould surfaces set opposite one another, dispensed between which is the batter to be baked. The means in question may be of the same type as those described in the Italian patent application No. TO2014A000445, filed in the name of the present applicant. In this connection, an example of embodiment of these means is schematically illustrated in Figure 3, where the mould surfaces mentioned above are designated by the reference numbers 101 and 201 and the wafer produced therein by the reference 4.

The process described herein envisages that the mould surface on which the aforesaid outer surface of the wafer comes to be formed - i.e., the surface that will come to constitute at least part of the outer surface of the shell of the end product - is the result of a surface treatment on the mould means such that the surface of the wafer formed thereon will present the desired lustre value higher than or equal to 20 gloss. The surface treatment in question is represented by formation of the mould surface with a value of roughness Ra (arithmetic mean deviation of the profile) equal to or less than 1.2 µm.

In various preferred embodiments, the plate or half-mould is made of a metallic alloy, preferably steel, and the mould surface constitutes the result of a surface treatment adapted to characterize this surface with a value of roughness comprised in the interval indicated above.

In various embodiments, such treatment is represented by a process of removal of material, for example a smoothing or lapping process performed on steel plate. In this instance, the mould surface can show roughness less than or equal to 0.1 µm.

In further embodiments, such treatment is represented by an operation of electropolishing. In this instance, the mould surface can show roughness less than or equal to 0.5 µm.

Moreover, in further embodiments, the treatment in question is represented by application of a surface coating on the plate or half-mould. In various embodiments, the treatment in question is represented by a process of vacuum plasma deposition (for example PECVD - Plasma-Enhanced Chemical Vapour Deposition), which obtains on the plate, preferably made of steel, synthesis of a nano-structured thin-film coating, for example of silicon oxide (SiO₂), with a thickness of 7/8 nm. In this instance, the mould surface can show roughness less than or equal to 0.1 µm.

In various embodiments, such coating is made of a material that has anti-adherent properties, which may be either of a plastic type or of a ceramic type. In various preferred embodiments, this coating is Teflon-based coating.

It should be noted that the treatment in question may also be represented by a combination of the treatments referred to above.

The process described herein then envisages baking the batter in the mould means until the wafer is obtained (step 30 of Figure 2).

The wafers obtained adopting the process just illustrated are used for forming the outer shell of the confectionery product described herein, of which Figures 1 and 1A illustrate an example of embodiment thereof.

As already envisaged in the known art, the shell in question may be formed either by two half-shells or else by a half-shell and a plane element or bottom (as in the example illustrated), and in this connection the mould means used are clearly prearranged for obtaining the wafers of the desired shapes. In the case of the plane element, the outer surface of the wafer described above is clearly the one that is to define part of the outer surface of the shell.

The end product is obtained by depositing the filling on one or both of the wafers formed and then coupling these together so as to constitute the aforesaid shell with the filling inside.

It is to be noted that, aside from the aspects highlighted above, the processes and means for obtaining the wafers in question and then forming the end product are in any case in themselves already known in the art, and consequently will not be described in further detail herein. In this regard, the patent documents Nos. TO2014A000445 EP2506718A1, EP1647190B1, filed in the name of the present applicant, describe some particularly advantageous examples of embodiment thereof. It is to be noted that the filling may present in the form of any filling contained within the shell of the product and does not necessarily have to be liquid or creamy but may present also in the solid state (for example, in the form of a shell contained within the product). Furthermore, the filling does not necessarily have to fill the shell completely; in fact, this may even be partially empty. Again, as has been seen, in the product described herein part of the outer surface thereof is defined by the wafer; this does not exclude, however, the possibility of the product having even so one or more outer layers, for example, a decorating coat, which, however, do not actually cover the wafer in question or in any case cover it only partially. Finally, even though the wafer described herein is preferably designed to form confectionery products comprising filled shells, the same wafer may also be used for forming products of another type, for example wafer products characterized by multilayer plane structures. Also in this case, the outer surface of the wafer described herein is to constitute at least part of the outer surface of the products.

### Examples of embodiment

As mentioned above, to identify the type of wafer that is able to meet the purposes referred to above, the present applicant has had to conduct various experimental tests.

Provided in what follows are the results regarding a test that envisaged the production of fourteen different sets of specimens of wafer, each set including fifteen specimens.

To obtain the various sets the following were used:
- six batters with different contents of cocoa powder, namely, 3 wt%, 4 wt%, 6 wt%, 8 wt%, 10 wt% and 12 wt%, with amounts of flour comprised between 29 wt% and 34 wt%, and amounts of water comprised between 49 wt% and 55 wt%, in particular such that, as the amounts of cocoa increased, the amounts of flour and water in the batter were instead reduced so as to obtain batters with one and the same degree of viscosity, whereas for all the batters the amount of sugar was approximately 5 wt%;
- three different moulds, in the case in point a conventional cast-iron mould, a mould with a Teflon-coated mould surface, and a mould made of steel with a mould surface obtained by a lapping process.

The cocoa powder used presented a percentage of cocoa butter comprised between 10 wt% and 12 wt% and a pH of between 6.0 and 8.0.

The surface of the conventional mould had a mean value of surface roughness (Ra) of 1.6 µm, the Teflon-coated surface had a mean value of surface roughness (Ra) of 1.035 µm, whilst the lapped surface made of steel had a mean value of roughness of 0.061 µm.

Using the cast-iron mould, specimens were produced from the batters with a content of cocoa of 3, 4, 6, and 8 wt%, respectively.

Using the mould with a Teflon-coated surface, specimens were produced from the batters with a content of cocoa respectively of 4, 6, 8, 10, and 12 wt%, respectively.

Using the mould made of steel, specimens were produced from the batters with a content of cocoa of 3, 4, 6, and 8 wt%, respectively. In all cases, the baking temperature was between 168°C and 172°C.

The specimens obtained presented the following weight per cent values of cocoa:
- from batters with 3 wt% of cocoa: 6.9 wt% final;
- from batters with 4 wt% of cocoa: 9.2 wt% final;
- from batters with 6 wt% of cocoa: 13.7 wt% final;
- from batters with 8 wt% of cocoa: 18.2 final;
- from batters with 10 wt% of cocoa: 21.1 wt% final; and
- from batters with 12 wt% of cocoa: 25 wt% final.

The specimens of the various sets all presented a planar shape and identical thickness, and moreover all presented an outer surface with characteristics substantially homogeneous throughout its extension.

The present applicant measured the gloss value of the outer surfaces of the specimens using a portable spectrophotometer, Model CM-700, marketed by the company Konica Minolta.

The specific techniques of the above instrument appear in Table 1 below.

This instrument has a d/8° geometry and is designed for calculating the gloss value with specular reflection in the 8-degree direction - with respect to the normal of the surface measured - and via the measurement obtained both with SCE (Specular Component Excluded) and with SCI (Specular Component Included).

Five measurements were made on all the specimens on as many areas of identical dimensions, to verify the repeatability of the measurements. Appearing in Tables 2, 3, and 4 below are the mean lustre values (expressed in gloss), as well as the corresponding standard deviation.

**Table 1- Technical specifications of the instrument**

| Model | KONICA MINOLTA - CM-700d |
|---|---|
| Illumination/viewing system | di:8°, de:8° (diffused illumination, 8-degree viewing angle) |
| | d:8° (diffused illumination, 8-degree viewing angle), selectable SCI (di:8° Specular Component Included) and/or SCE (de:8° Specular Component Excluded) measurement. |
| | Conforms to CIE No. 15, ISO 7724/1, ASTM E-1164, DIN 5033 Teil 7, and JIS Z8722 Condition C standards. |
| Size of integrating sphere | Ø 40 mm |
| Detector | Silicon-photodiode array (dual 36-element array) |
| Spectral-separation device | Diffraction grating |
| Wavelength range | 400 nm to 700 nm |
| Wavelength pitch | 10 nm |
| Half bandwidth | Approx. 10 nm |
| Light source | Pulsed xenon lamp (with UV-cut filter) |
| Measurement time | Approx. 1 second |
| Measurement/illumination area | MAV: Ø 8 mm / Ø 11 mm |
| | SAV: Ø 3 mm / Ø 6 mm |
| | * Changeable by replacing target mask and selecting lens reposition |
| Repeatability | Spectral reflectance: standard deviation within 0.1% |
| | Chromaticity value: standard deviation within ΔE*ab 0.04 * When a white-calibration plate is measured 30 times at 10-second intervals after white calibration |
| Inter-instrument agreement | Within ΔE*ab 0.2 (MAV/SCI) * Based on 12 BCRA Series II colour tiles compared to values measured with a master body at 23°C |
| Number of averaged measurements | 1 to 10 (auto average), 1 to 30 (manual average) |
| Observer condition | CIE: 2° and 10° standard observer |
| Illuminant condition | CIE: A, C, D50, D65, F2, F6, F7, F8, F10, F11, F12 (simultaneous evaluation is possible using two light sources) |
| Displayed data | Spectral values/graph, colorimetric values, colour-difference values/graph, PASS/FAIL result, colour patch, colour assessment |
| Colour spaces | L*a*b*, L*C*h, Hunter Lab, Yxy, XYZ, Munsell and colour differences in these spaces (except for Munsell) |
| Colorimetric data | MI, WI (ASTM E313), YI (ASTM E313-73/ASTM D1925), ISO brightness, 8° gloss value |
| Colour-difference formulas | ΔE*ab (CIE1976), ΔE*94 (CIE1994), ΔE00 (CIE 2000), CMC (1:c) |
| Operating temperature/humidity range | 5 to 35°C; relative humidity 80% or less with no condensation |

For the measurements, the MAV Ø 8 mm / Ø 11 mm was used, with automatic SCI and SCE measurements.

The lustre data gathered are given in the ensuing tables.

The laboratory analyses conducted confirmed that the properties sought, as mentioned above, were substantially found in a repeatable way in wafers presenting a lustre value higher than or equal to 20 gloss.

**Table 2 - Lustre values for specimens obtained with non-Teflon-coated cast-iron plate**

| Percentage of cocoa | Lustre values (gloss) | |
|---|---|---|
| | Average | Standard deviation |
| 3 wt% | 7.11 | 1.61 |
| 4 wt% | 7.62 | 1.5 |
| 6 wt% | 8.14 | 1.44 |
| 8 wt% | 7 | 1.71 |

**Table 3 - Lustre values for specimens obtained with Teflon-coated plate**

| Percentage of cocoa | Lustre values (gloss) | |
|---|---|---|
| | Average | Standard deviation |
| 4 wt% | 22.12 | 4.16 |
| 6 wt% | 28.63 | 3.42 |
| 8 wt% | 33.14 | 3.69 |
| 10 wt% | 23.05 | 3.78 |
| 12 wt% | 23.51 | 2.71 |

**Table 4 - Lustre values for specimens obtained with lapped steel-plate**

| Percentage of cocoa | Lustre values (gloss) | |
|---|---|---|
| | Average | Standard deviation |
| 3 wt% | 24.6 | 5.46 |
| 4 wt% | 26.88 | 3.97 |
| 6 wt% | 27.72 | 4.11 |
| 8 wt% | 23.72 | 3.92 |

## Claims

1. A confectionery product comprising a shell and a filling housed within said shell, wherein said shell is formed at least in part by a wafer, said product being **characterized in that**:
- said wafer is obtained starting from a batter containing cocoa powder;
- the outer surface of said wafer has a lustre value higher than or equal to 20 gloss, measured at an angle of reading of 8° with an instrument with d/8° geometry; and
- said wafer comprises a weight percentage of cocoa higher than or equal to 6.9 wt%.

2. The product according to Claim 1, wherein said wafer comprises a weight percentage of cocoa between 6.9 wt% and 12 wt%, extremes included, or else higher than or equal to 12 wt%, preferably comprised between 12 wt% and 25 wt%, extremes included.

3. The product according to any one of Claims 1 or 2, wherein said outer surface of said wafer constitutes at least part of the outer surface of said product.

4. The product according to any one of Claims 1 to 3, wherein said lustre value is equal to or higher than 30 gloss, measured at an angle of reading of 8° with an instrument with d/8° geometry.

5. A process for producing a confectionery product according to Claim 1,
said process comprising the operations of:
- preparing a batter for wafers;
- providing mould means defining a first mould surface and a second mould surface set opposite one another, on which said inner and outer surfaces of said wafer are to be formed, respectively;
- dispensing said batter for wafers between said first and second surfaces of said mould means; and
- subjecting said batter for wafers contained in said mould means to a baking step to obtain said wafer;
wherein said step of preparing the batter envisages:
- using cocoa powder as ingredient of said batter in a weight percentage higher than or equal to 3 wt%; and
- using water as ingredient of said batter in a weight percentage between 40 wt% and 60 wt%;
and wherein said second mould surface has a value of roughness Ra less than or equal to 1.2 µm.

6. The process according to claim 5, wherein said step of preparing the batter envisages using flour, water, and cocoa powder.

7. The process according to any one of claims 5 and 6, wherein said step of preparing the batter envisages using a weight percentage of cocoa powder between 3 wt% and 6 wt%, extremes included, or else higher than or equal to 6 wt%, preferably between 6 wt% or 7 wt% and 12 wt%, extremes included, even more preferably equal to 8 wt%.

8. The process according to any one of claims 5 to 7, wherein said cocoa powder is cocoa obtained by a treatment of squeezing and refining.

9. The process according to claim 5, wherein said second mould surface constitutes the result of a surface treatment of said mould means that is represented by a process of removal of material, preferably performed on a plate or half-mould made of steel.

10. The process according to claim 5, wherein said second mould surface constitutes the result of a surface treatment of said mould means that is represented by a process of vacuum plasma deposition that synthesizes a nano-structured thin-film coating.

11. The process according to claim 5 or 9, wherein said second mould surface constitutes the result of a surface treatment of said mould means that is represented by an operation of electropolishing, preferably performed on a plate or half-mould made of steel.

12. The process according to claim 5, wherein said second mould surface constitutes the result of a surface treatment of said mould means that is represented by making the mould surface of a material having anti-adherent properties.

13. The process according to claim 12, wherein said surface treatment is represented by application on said mould means of a coating of material of a plastic or ceramic type with anti-adherent properties, which comes to define said mould surface.

## Patentansprüche

1. Süßwarenprodukt, umfassend eine Schale und eine Füllung, die in der Schale untergebracht ist, worin die Schale zumindest teilweise aus einer Waffel gebildet ist, wobei das Produkt **dadurch gekennzeichnet ist, dass**:
- die Waffel ausgehend von einem Teig, der Kakaopulver enthält, erhalten ist;
- die äußere Oberfläche der Waffel einen Glanzwert von höher als oder gleich 20 Gloss aufweist, gemessen bei einem Ablesewinkel von 8° mit einem Instrument mit d/8°-Geometrie; und
- die Waffel einen Gewichtsanteil an Kakao von höher als oder gleich 6,9 Gew.-% umfasst.

2. Produkt gemäß Anspruch 1, worin die Waffel einen Gewichtsanteil an Kakao zwischen 6,9 Gew.-% und 12 Gew.-% umfasst, einschließlich Extremwerte, oder auch höher als oder gleich 12 Gew.-%, vorzugsweise umfassend zwischen 12 Gew.-% und 25 Gew.-%, einschließlich Extremwerte.

3. Produkt gemäß Anspruch 1 oder 2, worin die äußere Oberfläche der Waffel zumindest einen Teil der äußeren Oberfläche des Produkts bildet.

4. Produkt gemäß mindestens einem der Ansprüche 1 bis 3, worin der Glanzwert gleich oder höher ist als 30 Gloss, gemessen bei einem Ablesewinkel von 8° mit einem Instrument mit d/8°-Geometrie.

5. Verfahren zur Herstellung eines Süßwarenprodukts gemäß Anspruch 1,
das Verfahren umfassend die Vorgänge:
- Herstellen eines Teigs für Waffeln;
- Bereitstellen eines Formmittels, das eine erste Formoberfläche und eine zweite Formoberfläche definiert, welche einander gegenüberliegen, und auf denen die inneren bzw. äußeren Oberflächen der Waffel zu formen sind;
- Verteilen des Teigs für die Waffeln zwischen der ersten und der zweiten Oberfläche des Formmittels; und
- Backen des Teigs für Waffeln, der in dem Formmittel enthalten ist, so dass die Waffel erhalten wird;
worin der Schritt des Herstellens des Teigs vorsieht:
- das Verwenden von Kakaopulver als Zutat des Teigs in einem Gewichtsanteil von höher als oder gleich 3 Gew.-%; und
- das Verwenden von Wasser als Zutat des Teigs in einem Gewichtsanteil zwischen 40 Gew.-% und 60 Gew.-%;
und worin die zweite Formoberfläche einen Rauigkeitswert Ra von weniger als oder gleich 1,2 µm aufweist.

6. Verfahren gemäß Anspruch 5, worin der Schritt des Herstellens des Teigs die Verwendung von Mehl, Wasser und Kakaopulver vorsieht.

7. Verfahren gemäß mindestens einem der Ansprüche 5 und 6, worin der Schritt des Herstellens des Teigs das Verwenden eines Gewichtsanteils von Kakaopulver zwischen 3 Gew.-% und 6 Gew.-%, einschließlich Extremwerte, oder auch höher als oder gleich 6 Gew.-%, vorzugsweise zwischen 6 Gew.-% oder 7 Gew.-% und 12 Gew.-%, einschließlich Extremwerte, noch bevorzugter gleich 8 Gew.-%, vorsieht.

8. Verfahren gemäß mindestens einem der Ansprüche 5 bis 7, worin das Kakaopulver Kakao ist, der durch eine Druck- und Raffinierungsbehandlung erhalten ist.

9. Verfahren gemäß Anspruch 5, worin die zweite Formoberfläche das Ergebnis einer Oberflächenbehandlung des Formmittels darstellt, welche einem Vorgang des Abtragens von Material entspricht, der vorzugsweise auf einer Platte oder einer Halbform aus Stahl durchgeführt wird.

10. Verfahren gemäß Anspruch 5, worin die zweite Formoberfläche das Ergebnis einer Oberflächenbehandlung des Formmittels darstellt, welche einem Vorgang der Vakuumplasmaabscheidung entspricht, der eine nanostrukturierte Dünnfilmbeschichtung synthetisiert.

11. Verfahren gemäß Anspruch 5 oder 9, worin die zweite Formoberfläche das Ergebnis einer Oberflächenbehandlung des Formmittels darstellt, welche einem Elektropoliervorgang entspricht, der vorzugsweise auf einer Platte oder einer Halbform aus Stahl durchgeführt wird.

12. Verfahren gemäß Anspruch 5, worin die zweite Formoberfläche das Ergebnis einer Oberflächenbehandlung des Formmittels darstellt, welche dem Herstellen der Formoberfläche aus einem Material mit antihaftenden Eigenschaften entspricht.

13. Verfahren gemäß Anspruch 12, worin die Oberflächenbehandlung dem Aufbringen einer Beschichtung aus einem Kunststoff- oder Keramikmaterial mit antihaftenden Eigenschaften auf das Formmittel entspricht, wodurch die Formoberfläche definiert wird.

## Revendications

1. Produit de confiserie comprenant une coque et une garniture située à l'intérieur de ladite coque, dans lequel ladite coque est formée au moins en partie d'une gaufrette, ledit produit étant **caractérisé en ce que** :
- ladite gaufrette est obtenue à partir d'une pâte contenant de la poudre de cacao ;
- la surface extérieure de ladite gaufrette a une valeur de lustre correspondant à un brillant égal ou supérieur à 20, mesurée à un angle de lecture de 8° au moyen d'un instrument de géométrie d/8° ;
- ladite gaufrette comprend un pourcentage en poids de cacao égal ou supérieur à 6,9 % en poids.

2. Produit selon la revendication 1, dans lequel ladite gaufrette comprend un pourcentage en poids de cacao compris entre 6,9 % en poids et 12 % en poids, bornes comprises, ou sinon égal ou supérieur à 12 % en poids, de préférence compris entre 12 % en poids et 25 % en poids, bornes comprises.

3. Produit selon l'une quelconque des revendications 1 et 2, dans lequel ladite surface extérieure de ladite gaufrette constitue au moins une partie de la surface extérieure dudit produit.

4. Produit selon l'une quelconque des revendications 1 à 3, dans lequel ladite valeur de lustre correspond à un brillant égal ou supérieur à 30, mesurée à un angle de lecture de 8° au moyen d'un instrument de géométrie d/8°.

5. Procédé pour produire un produit de confiserie selon la revendication 1, ledit procédé comprenant les opérations consistant à :
- préparer une pâte à gaufrettes ;
- disposer d'un moyen formant moule définissant une première surface de moule et une deuxième surface de moule placées à l'opposé l'une de l'autre, sur lesquelles lesdites surfaces intérieure et extérieure de ladite gaufrette doivent être formées, respectivement ;
- placer ladite pâte à gaufrettes entre lesdites première et deuxième surfaces dudit moyen formant moule ; et
- soumettre ladite pâte à gaufrettes contenue dans ledit moyen formant moule à une étape de cuisson pour que ladite gaufrette soit obtenue ;
dans lequel ladite étape de préparation de la pâte envisage :
- l'utilisation de poudre de cacao en tant qu'ingrédient de ladite pâte à un pourcentage en poids égal ou supérieur à 3 % en poids ; et
- l'utilisation d'eau en tant qu'ingrédient de ladite pâte à un pourcentage en poids compris entre 40 % en poids et 60 % en poids ;
et dans lequel ladite deuxième surface de moule a une valeur de rugosité Ra égale ou inférieure à 1,2 µm.

6. Procédé selon la revendication 5, dans lequel ladite étape de préparation de la pâte envisage l'utilisation de farine, d'eau, et de poudre de cacao.

7. Procédé selon l'une quelconque des revendications 5 et 6, dans lequel ladite étape de préparation de la pâte envisage l'utilisation d'un pourcentage en poids de poudre de cacao compris entre 3 % en poids et 6 % en poids, bornes comprises, ou sinon égal ou supérieur à 6 % en poids, de préférence compris entre 6 % en poids ou 7 % en poids et 12 % en poids, bornes comprises, mieux encore égal à 8 % en poids.

8. Procédé selon l'une quelconque des revendications 5 à 7, dans lequel ladite poudre de cacao est du cacao obtenu par un traitement de pressage et de raffinage.

9. Procédé selon la revendication 5, dans lequel ladite deuxième surface de moule constitue le résultat d'un traitement en surface dudit moyen formant moule qui est représenté par un procédé de retrait de matériau, de préférence réalisé sur une plaque ou un demi-moule fait en acier.

10. Procédé selon la revendication 5, dans lequel ladite deuxième surface de moule constitue le résultat d'un traitement en surface dudit moyen formant moule qui est représenté par un procédé de dépôt par plasma sous vide qui synthétise un revêtement en film mince nanostructuré.

11. Procédé selon la revendication 5 ou 9, dans lequel ladite deuxième surface de moule constitue le résultat d'un traitement en surface dudit moyen formant moule qui est représenté par une opération de polissage électrolytique, effectuée de préférence sur une plaque ou un demi-moule fait en acier.

12. Procédé selon la revendication 5, dans lequel ladite deuxième surface de moule constitue le résultat d'un traitement en surface dudit moyen formant moule qui est représenté par la réalisation de la surface de moule en un matériau ayant des propriétés antiadhésives.

13. Procédé selon la revendication 12, dans lequel ledit traitement de surface est représenté par l'application sur ledit moyen formant moule d'un revêtement de matériau de type plastique ou céramique ayant des propriétés antiadhésives, qui parvient à définir ladite surface de moule.
